# FASCICULE DE BREVET EUROPEEN

(11) **EP 3 123 659 B1**
(45) Date de publication et mention de la délivrance du brevet: **29.09.2021**
(21) Numéro de dépôt: 15717043.2
(22) Date de dépôt: 27.03.2015
(51) Int. Cl.: H04L 9/08

(54) **PROCÉDÉ DE SÉLECTION DE CLÉ POUR TRAITEMENT CRYPTOGRAPHIQUE DE DONNÉES**
SCHLÜSSELAUSWAHLVERFAHREN FÜR KRYPTOGRAFISCHE DATENVERARBEITUNG
KEY SELECTION METHOD FOR CRYPTOGRAPHIC DATA PROCESSING

(30) Priorité: 28.03.2014 FR 1452760
(43) Date de publication de la demande: 01.02.2017
(73) Titulaire: ORANGE, 92130 Issy-les-Moulineaux (FR)
(72) Inventeur: KOUNTOURIS, Apostolos, F-38000 Grenoble (FR); KLAY, Francis, F-22300 Lannion (FR); MADHUSUDAN, Giyyarpuram, F-38100 Grenoble (FR)
(86) Numéro de dépôt international: PCT/FR2015/050800
(87) Numéro de publication internationale: WO 2015/145090

(56) Documents cités:
- EP-A1- 2 381 615
- EP-A2- 0 997 808
- US-A- 6 157 723
- US-A1- 2009 144 550
- DONGGANG LIU ET AL: "Location-Based Pairwise Key Establishments for Static Sensor Networks", PROCEEDINGS OF THE FIRST ACM WORKSHOP ON SECURITY OF AD HOC AND SENSOR NETWORKS. SASN 2003. FAIRFAX, VI; [PROCEEDINGS OF THE ACM WORKSHOP ON SECURITY OF AD HOC AND SENSOR NETWORKS. SASN], NEW YORK, NY : ACM, US, 1 janvier 2003 (2003-01-01), pages 1-11, XP002995964, ISBN: 978-1-58113-783-5
- CHRISTINE HENNEBERT ET AL: "Entropy harvesting from physical sensors", SECURITY AND PRIVACY IN WIRELESS AND MOBILE NETWORKS, ACM, 2 PENN PLAZA, SUITE 701 NEW YORK NY 10121-0701 USA, 17 April 2013 (2013-04-17), pages 149-154, XP058015346, DOI: 10.1145/2462096.2462122 ISBN: 978-1-4503-1998-0

## Description

La présente invention se rapporte au domaine de l'accès. Il concerne plus particulièrement l'accès à des données ou l'accès à un équipement ou à un bâtiment.

De nombreux systèmes d'accès sont basés sur la connaissance d'un même secret, par exemple un code ou une clé cryptographique, partagé par des entités différentes ou sur des paires de clés cryptographiques associées.

Parmi les systèmes d'accès à des données, on peut par exemple citer des systèmes comportant des premiers dispositifs, tels que par exemple des capteurs répartis sur un territoire géographique, aptes à transmettre confidentiellement des données à au moins un deuxième dispositif. Les données transmises par un premier dispositif sont chiffrées par ce premier dispositif avec une première clé connue de ce premier dispositif. L'accès aux données au niveau du deuxième dispositif ayant reçu les données nécessite la connaissance d'une deuxième clé associée à la première clé.

On peut également citer des systèmes de contrôle d'accès par une pluralité d'utilisateurs à des pièces ou des parties d'un ou plusieurs bâtiments. Dans ces systèmes, les utilisateurs doivent présenter un code à un dispositif de contrôle situé au niveau de chaque porte dont l'accès est contrôlé. Le dispositif de contrôle vérifie alors l'authenticité du code présenté et commande ou non l'ouverture de la porte en fonction du résultat de la vérification.

Pour des raisons de changement d'acteur, par exemple un changement de gérant au niveau des deuxièmes dispositifs, ou pour renforcer la sécurité, il peut être nécessaire de changer le jeu de clés ou le code utilisés dans ces systèmes. Cette tâche peut s'avérer particulièrement coûteuse lorsque les dispositifs de contrôle ou les premiers dispositifs sont d'une part nombreux et répartis géographiquement et d'autre part ne possèdent pas de moyens de communication aptes à recevoir une nouvelle clé ou un nouveau code.

Par exemple, un capteur relié à un second dispositif via une liaison sans fil, par exemple une liaison radio peut, pour des raisons de contraintes énergétiques, ne pas disposer de moyens de réception.

Egalement, par exemple, un dispositif de contrôle peut ne pas avoir de moyens de communication pour communiquer avec un autre équipement tel qu'un serveur au travers d'un réseau.

Le renouvellement des clés ou des codes nécessite alors le déplacement d'un opérateur sur le terrain.

Un des buts de l'invention est de remédier à des insuffisances/inconvénients de l'état de la technique et/ou d'y apporter des améliorations.

A cette fin, l'invention propose un procédé de traitement de données mis en œuvre par un dispositif de traitement et une pluralité de dispositifs de réception selon les revendications 1 et 2.

Une clé est une clé cryptographique ou une information confidentielle.

Une clé cryptographique est une clé secrète ou publique d'une paire de clés cryptographiques ou une clé secrète.

Une information confidentielle est un secret tel que par exemple un code d'accès.

Plusieurs clés sont préalablement enregistrées dans une mémoire d'un dispositif de traitement. Cette phase est par exemple réalisée lors de l'initialisation du dispositif, par exemple lors de sa mise en place sur site.

Grâce au procédé, il est possible pour un dispositif de traitement mettant en œuvre le procédé de traitement de changer de clé sans nécessité pour lui d'avoir des moyens de réception d'une nouvelle clé.

Les clés sont préenregistrées. Préférentiellement, elles sont déterminées par un dispositif de gestion possédant des capacités de calcul suffisamment importantes pour générer des clés robustes. Ainsi, le procédé de traitement est particulièrement adapté aux dispositifs de traitement disposant de faibles capacités de calcul. La détermination des clés par un module autre que le dispositif de traitement permet d'économiser l'énergie du dispositif de traitement.

Un critère est prédéfini relativement à au moins une valeur courante d'au moins un référentiel donné. La valeur courante évolue soit régulièrement, soit en fonction de conditions mais le référentiel étant connu, il est possible pour tout système de connaitre cette valeur courante.

Avantageusement, le critère est également relatif à au moins une valeur de validité associée à la clé. Une ou plusieurs valeurs de validité sont prédéfinies pour chaque clé enregistrée.

Une date courante est une valeur courante simple à déterminer. Il est ainsi simple pour le dispositif de traitement de connaître la date courante.

L'utilisation de périodes de validité permet de changer de clés en fonction du temps.

Une clé n'est ainsi valide que pour une ou éventuellement plusieurs périodes prédéfinies. En dehors de ces périodes, elle est inutilisée.

Lorsqu'une seule période de validité est associée à une clé, la clé devient obsolète lorsque la période est écoulée. L'utilisation d'une nouvelle clé permet de renforcer la sécurité du système.

Plusieurs clés pour différentes périodes de validité sont préenregistrées. Ainsi, il n'est pas nécessaire d'intervenir sur le terrain pour enregistrer une nouvelle clé lorsque la précédente n'est plus valide. Ceci permet un changement de clé pour des équipements ne possédant pas de moyens de réception d'une nouvelle clé tout en évitant une intervention d'un opérateur.

Selon une caractéristique particulière, ladite période de validité d'une clé de la pluralité est définie par une première et une deuxième valeur et la première et/ou la deuxième valeur est obtenue à partir d'une information temporelle préalablement enregistrée en association avec ladite clé de la pluralité.

L'attribution de périodes de validité de durée différente pour chaque clé permet de renforcer la robustesse du système.

Il est connu de EP 2 381 615 A1 (TOSHIBA KK [JP]; UNIV YOKOHAMA NAT [JP]) 26.11.2011 et de US 2009/144550 A1 (ARUNAN THENMOZHI [IN]) 04.06.2009 des dispositifs de traitement de données préenregistrant une pluralité de clés et aptes à transmettre des données chiffrées à l'aide d'une clé de chiffrement sélectionée selon un critère de comparaison de date courante avec une période de validité.

Selon un mode de réalisation particulier du procédé de traitement le critère relatif à une date décrit précédement est utilisé en combinaison avec le critère relatif à une position géographique courante et à une zone de positionnement prédéfinie associée à ladite clé. L'utilisation du critère relatif à une date comme unique critère n'est pas couvert par l'invention.

Plusieurs clés pour différentes zones géographiques sont préenregistrées. La clé est sélectionnée en fonction de la position géographique du dispositif de traitement mettant en œuvre le procédé de traitement. Le dispositif de traitement de l'invention est un dispositif mobile.

Le procédé de traitement de données comporte en outre une étape d'obtention de deuxièmes données par application à des premières données obtenues, d'une fonction cryptographique utilisant la clé sélectionnée et une étape d'envoi desdites deuxièmes données via une liaison de communication.

Ceci est particulièrement adapté aux systèmes d'accès à des données dans lesquels des dispositifs de traitement transmettent des données, par exemple des données de mesure, à un dispositif de réception et dans lesquels, les données sont transmises chiffrées pour des raisons de confidentialité. Le procédé de l'invention évite l'intervention sur site d'un opérateur lors de chaque changement de clé.

La fonction mathématique est par exemple une fonction cryptographique permettant de chiffrer les données à l'aide de la clé sélectionnée.

D'autres particularités et avantages de la présente invention apparaitront dans la description suivante d'un mode de réalisation donné à titre d'exemple non limitatif, en référence aux dessins annexés, dans lesquels :
- la figure 1 est un schéma illustrant un système selon un premier mode de réalisation de l'invention,
- la figure 2 est un organigramme illustrant les différentes étapes d'un procédé de transmission et d'un procédé de réception selon un premier mode de réalisation de l'invention,
- la figure 3 est un schéma illustrant un système selon un mode de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

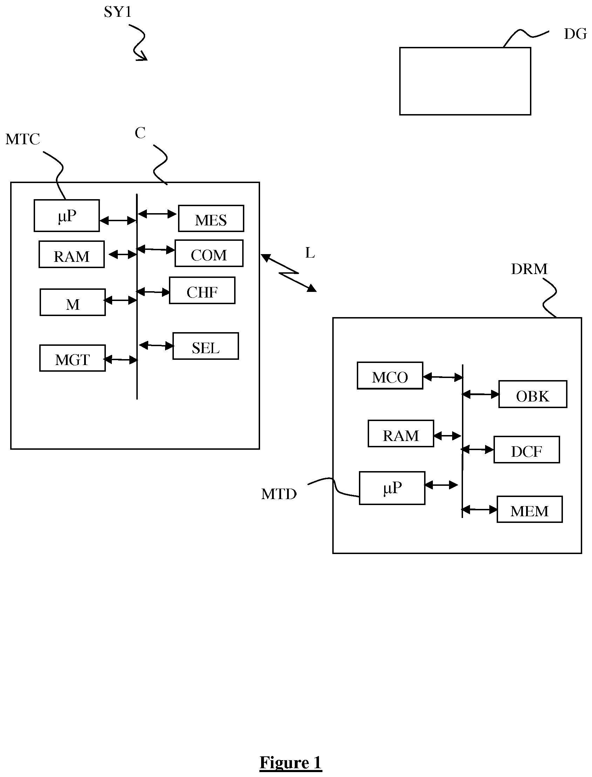

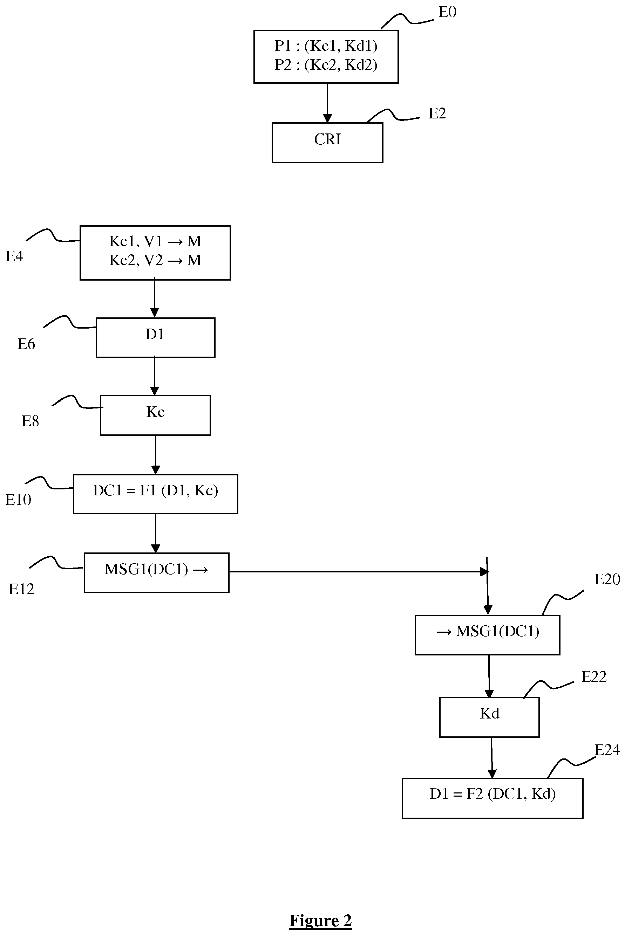

Un premier mode de réalisation d'un procédé de traitement va maintenant être décrit en référence aux figures 1 et 2.

En référence à la **figure 1****,** un système SY1 comprend un dispositif de réception DRM et un dispositif de mesures C apte à communiquer avec le dispositif de réception DRM via une liaison de communication sans fil L, par exemple une liaison radio.

Le dispositif de mesures C représente un dispositif de traitement au sens de l'invention.

Le dispositif de réception DRM comporte de façon connue, notamment une unité de traitement MTD équipée d'un microprocesseur, une ou plusieurs mémoires de stockage MEM, par exemple de type EEPROM et une mémoire vive de type RAM.

Le dispositif de réception DRM peut comporter de manière classique et non exhaustive les éléments suivants: un clavier, un écran de visualisation, un module d'affichage pour l'affichage sur l'écran de visualisation, un moyen de stockage...

Le dispositif de réception DRM comporte également un module de communication MCO apte à recevoir des données via la liaison de communication L, un module d'obtention OBK d'une clé et un module de déchiffrement DCF.

A titre d'alternative, le module de communication MCO du dispositif de réception de mesures DRM est également apte à transmettre des données via la liaison de communication L.

La mémoire de stockage MEM comporte des registres mémorisant un programme d'ordinateur comportant des instructions de programme adaptées à mettre en œuvre un procédé de réception de données selon un mode de réalisation de l'invention décrit ultérieurement en référence à la figure 2.

Le dispositif de mesures C est par exemple un compteur d'électricité configuré pour mesurer les consommations électriques d'une habitation.

A titre d'alternative, le dispositif de mesures C est un compteur d'eau, de gaz ou encore de ressources d'une agglomération telles que l'arrosage, la pollution, des places de parking...

Plus généralement, le dispositif de mesures C est un dispositif apte à recueillir des données et à les transmettre via une liaison de communication sans fil.

Le dispositif de mesures C comporte de façon connue, notamment une unité de traitement MTC équipée d'un microprocesseur, une mémoire de stockage M, par exemple de type EEPROM et une mémoire vive de type RAM.

Le dispositif de mesures C comprend également un module de mesures MES, un module de communication COM, un module de sélection d'une clé SEL, un module de chiffrement CHF et un module de gestion MGT.

Le module de mesures MES est apte à obtenir un ensemble de mesures effectuées régulièrement ou non.

Un ensemble de mesures comprend une ou plusieurs mesures.

Par exemple, le module de mesures MES est apte à lire d'une part un premier compteur indiquant un nombre de kilowatts correspondant à une première période d'une journée, appelée "période heures creuses" et d'autre part, un deuxième compteur indiquant un nombre de kilowatts correspondant à une deuxième période de la journée, appelée "période heures pleines".

Le module de communication COM est apte à transmettre des données via la liaison de communication L.

A titre d'alternative, le système SY1 comporte une pluralité de dispositifs de mesures aptes à transmettre respectivement des ensembles de mesures à destination du dispositif de réception DRM.

La mémoire de stockage M comporte des registres mémorisant un programme d'ordinateur comportant des instructions de programme adaptées à mettre en œuvre un procédé de traitement de données décrit ultérieurement en référence à la figure 2.

Le système SY1 comporte également un dispositif de gestion DG.

Un mode de réalisation d'un procédé de traitement et d'un procédé de réception mis en œuvre dans le système SY1, va maintenant être décrit en référence à la **figure 2**.

Lors d'une première étape préalable E0, le dispositif de gestion DG obtient une pluralité de paires de clés cryptographiques. Chaque paire contient une première clé cryptographique et une deuxième clé cryptographique associée à la première.

Par exemple, chaque paire de clés de la pluralité est une paire de clés symétriques. Dans ce cas, la première clé et la deuxième clé de chaque paire de clés sont identiques.

A titre d'alternative, la première clé est une clé publique et la deuxième clé est une clé privée, ou secrète, associée à la clé publique.

Par exemple, 2 paires de clés (Kcl, Kdl), (Kc2, Kd2) sont obtenues.

Les paires de clés sont générées par un module de génération de clés inséré dans le dispositif de gestion DG ou par un module indépendant apte à générer et à transmettre de façon sécurisée les paires de clés générées au dispositif de gestion DG.

Lors d'une deuxième étape préalable E2, un critère CRI est prédéfini.

Le critère CRI est par exemple un critère relatif à une valeur de longitude courante et à une valeur de latitude courante. Le repère est alors défini dans un repère géographique. À titre d'alternative, le critère CRI est relatif à une date courante et à une position géographique courante, par exemple une position GPS (pour « Global Positioning System»).

Egalement, à titre d'alternatives, plusieurs critères sont prédéfinis.

Le critère CRI est également défini par rapport à une ou plusieurs valeurs de validité permettant de définir des plages ou des zones de validité.

Lors d'une troisième étape préalable E4, les premières clés déterminées Kc1, Kc2 sont obtenues par le dispositif de mesures C et enregistrées dans une mémoire du dispositif de mesures C, par exemple la mémoire M. Cette étape est par exemple réalisée avant l'installation du dispositif de mesures C sur site ou lors de l'installation du dispositif de mesures C sur site ou encore lors du passage d'un opérateur, par exemple un technicien, sur le site où est installé le dispositif de mesures C.

Pour cela, les premières clés Kc1, Kc2 sont par exemple transmises de façon sécurisée à un dispositif portable de l'opérateur et transmises ensuite du dispositif portable au dispositif de mesures C. Le dispositif portable est par exemple une carte à puce ou un dispositif de type « clé USB »( « Universal Serial Bus » en anglais).

Chaque première clé Kc1, Kc2 est respectivement enregistrée dans la mémoire M du dispositif de mesures en association avec une information temporelle V1, V2 permettant au dispositif de mesures C de déterminer une période de validité pour chaque clé.

L'information temporelle est par exemple une date de début de validité et une date de fin de validité.

A titre d'alternative, les périodes de validité étant consécutives, l'information temporelle est une date de fin de validité.

Egalement, à titre d'alternative, les périodes de validité étant consécutives et de même durée, aucune information temporelle n'est enregistrée en association avec chaque première clé. Dans ce cas, les clés cryptographiques Kc1, Kc2 sont enregistrées selon un ordre prédéfini.

Lors d'une étape E6, le module de mesures MES du dispositif de mesures C collecte des données de mesures D1.

Les données de mesure D1 représente des premières données.

Lors d'une étape E8, le module de sélection SEL sélectionne une première clé cryptographique Kc parmi les premières clés cryptographiques Kc1, Kc2 enregistrées. La sélection est effectuée en fonction du critère CRI. La sélection est par exemple effectuée en fonction d' un premier critère de comparaison d'une date courante avec des dates de validité et un deuxième critère de comparaison d'une position géographique courante avec une ou positions géographiques prédéfinies.

Lors d'une étape E10, le module de chiffrement CHF du dispositif de mesures C obtient des deuxièmes données DC1 par application d'une fonction cryptographique F1 aux premières données D1. La fonction cryptographique F1 utilise en paramètre la clé Kc sélectionnée lors de l'étape E8.

Lors d'une étape E12, le module de gestion MGT du dispositif de mesures C commande la transmission d'un message MSG1 contenant les deuxièmes données obtenues DC1, via le module de communication COM et la liaison de communication L.

Le message MSG1 contenant les deuxièmes données DC1 est reçu par le module de communication MCO du dispositif de réception DRM lors d'une étape E20.

Lors d'une étape E22, le module d'obtention de clé OBK du dispositif de réception DRM obtient la deuxième clé cryptographique Kd associée à la première clé cryptographique Kc. La deuxième clé Kd est par exemple obtenue par lecture d'une mémoire d'un dispositif portable d'un opérateur. Un tel dispositif portable de l'opérateur est par exemple une carte à puce ou une clé de type « USB » apte à être connectée au dispositif de réception DRM. Dans ce cas, la deuxième clé Kd a été obtenue auprès du dispositif de gestion DG par le dispositif portable et enregistrée dans le dispositif portable lors d'une procédure préalable d'enregistrement de la deuxième clé.

A titre d'alternative, la deuxième clé Kd est transmise par le dispositif de gestion DG au dispositif de réception de mesures DRM. La deuxième clé Kd est par exemple transmise par le dispositif de gestion DG suite à la réception d'une demande de deuxième clé transmise par le dispositif de réception DRM. Elle est par exemple transmise lors d'une procédure sécurisée comprenant une procédure d'authentification forte de l'opérateur souhaitant accéder aux premières données.

Lors d'une étape E24, le module de déchiffrement DCF applique aux deuxièmes données DC1 reçues, une deuxième fonction cryptographique F2. La deuxième fonction cryptographique F2 utilise en paramètre la deuxième clé Kd obtenue lors de l'étape E22.

Le module de déchiffrement DCF obtient ainsi les premières données D1 initialement recueillies par le dispositif de mesures C.

Dans le mode de réalisation décrit, la fonction cryptographique F1 est une fonction de chiffrement et la fonction cryptographique F2 est une fonction de déchiffrement.

La première fonction cryptographique F1, respectivement la deuxième fonction cryptographique F2 sont des exemples de fonctions mathématiques.

La première fonction F1 et la deuxième fonction F2 sont telles que F2(F1(D1, Kc),Kd)= D1 lorsque Kc et Kd sont des clés associées.

Les étapes E4, E6, E8, E10 et E12 représentent les étapes du procédé de traitement.

Les étapes E20, E22 et E24 représentent les étapes du procédé de réception.

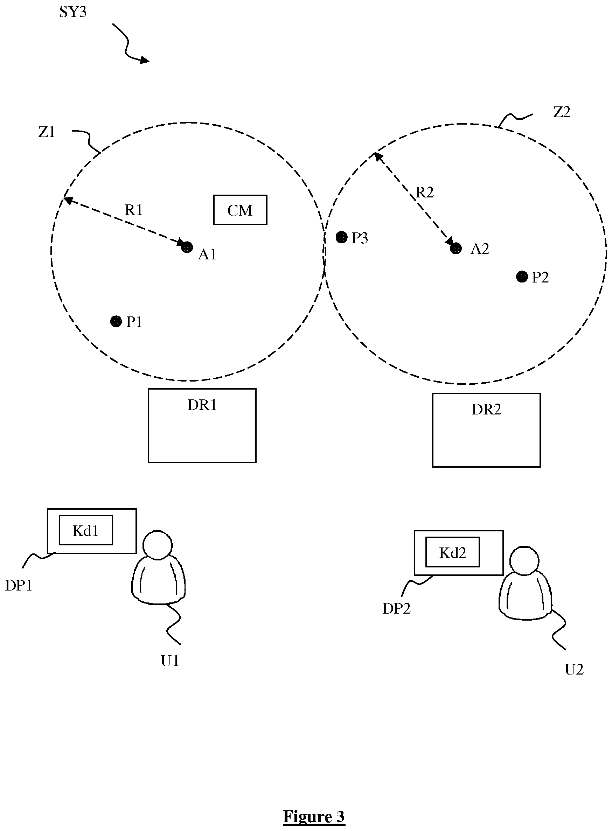

Un mode de réalisation va maintenant être décrit en référence à la figure 3. La **figure 3** illustre un système SY3 comprenant un dispositif de mesures CM et deux dispositifs de réception DR1 et DR2.

Le dispositif de mesures CM est un dispositif mobile. Il est apte à collecter des données de mesures, par exemple des données relatives à la qualité de l'air ambiant. Il est également apte à transmettre des messages de données via une liaison sans fil, par exemple une liaison de type radio.

Le dispositif de mesures CM représente un dispositif de traitement de données au sens de l'invention.

A titre d'alternative, le système SY3 comprend plusieurs dispositifs de mesure.

Un critère CR2 est prédéfini. Le critère CR2 est relatif à une position géographique courante du dispositif de mesures CM.

La position géographique courante est par exemple définie par les coordonnées GPS (pour « Global Positioning System»).

A titre d'alternative, la position géographique courante est définie dans un autre repère.

Le premier dispositif de réception DR1 est situé à proximité d'une première zone géographique Z1 et le deuxième dispositif de réception DR2 est situé à proximité d'une deuxième zone géographique Z2.

La zone géographique Z1 est par exemple une zone circulaire définie par une position d'un point central A1 et par un rayon R1.

La zone géographique Z2 est par exemple une zone circulaire définie par une position d'un point central A2 et par un rayon R2.

A titre d'alternative, la zone Z1et/ou la zone Z2 est une zone non circulaire, par exemple une zone rectangulaire, ovale ou encore une zone définie par deux valeurs de latitude et/ou deux valeurs de longitude.

Egalement, à titre d'alternative, la forme de la zone Z1 est différente de la forme de la zone Z2.

Le dispositif de mesures CM est apte à se déplacer dans les zones géographiques Z1 et Z2.

Des paires de clés cryptographiques ont préalablement été générées par un dispositif de gestion (non représenté).

Par exemple, deux paires de clés P1, P2 sont générées.

La paire de clés P1 contient une première clé Kc1 et une deuxième clé associée Kd1.

La paire de clés P2 contient une première clé Kc2 et une deuxième clé associée Kd2.

Une ou plusieurs valeurs identifiant la première zone Z1 sont associées à la paire P1. Par exemple, les valeurs identifiant la zone Z1 sont des coordonnées GPS (pour « Global position System ») du point central A1 et une valeur définissant le rayon R1 de la zone Z1.Une ou plusieurs valeurs identifiant la première zone Z2 sont associées à la paire P2. Par exemple, les valeurs identifiant la zone Z2 sont des coordonnées GPS (pour « Global position System ») du point central A2 et une valeur définissant le rayon R2 de la zone Z2.

Les valeurs identifiant la zone Z1, respectivement la zone Z2, représentent des valeurs de validité associée à la clé Kc1, respectivement à la clé Kc2.

Le critère CR2 est défini par « la clé sélectionnée est la clé associée à la zone où se situe le dispositif de mesures CM»

Les premières clés Kc1, Kc2 des paires de clés P1, P2 générées ainsi que les valeurs identifiant les zones Z1, Z2 associées à chaque paire de clés P1, P2 ont été enregistrées dans une mémoire du dispositif de mesures CM lors d'une étape préalable.

La deuxième clé Kd1 est fournie à un premier utilisateur U1 du premier dispositif de réception DR1. Par exemple, la deuxième clé Kd1 est enregistrée dans une zone mémoire sécurisée d'un dispositif portable DP1 de l'utilisateur U1.

La deuxième clé Kd2 est fournie à un deuxième utilisateur U2 du deuxième dispositif de réception DR2. Par exemple, la deuxième clé Kd2 est enregistrée dans une zone mémoire sécurisée d'un dispositif portable DP2 de l'utilisateur U2.

A un premier instant courant T1, le dispositif de mesures CM est à une position courante P1, dans la zone Z1 et obtient des données de mesures DM1.

Le dispositif de mesures CM sélectionne une clé K parmi les clés enregistrées dans le dispositif de mesures CM.

La clé K est sélectionnée en fonction du critère CR2. La position géographique courante du dispositif CM étant une position de la zone Z1, la clé K sélectionnée est la clé Kc1.

Puis, le dispositif de mesures CM obtient des deuxièmes données DS1 par application d'une première fonction cryptographique F1 aux premières données DM1 et transmet un message de données contenant les deuxièmes données DS1 via la liaison de communication radio.

Le message de données est reçu par le premier dispositif de réception DR1.

L'utilisateur U1 accède au dispositif de réception DR1 et commande le déchiffrement des données reçues.

Le premier dispositif de réception DR1 obtient la deuxième clé Kd1 par accès à la zone mémoire sécurisée du dispositif portable DP1 de l'utilisateur U1.

Les données de mesures DM1 recueillies par le dispositif de mesures CM sont obtenues par le dispositif de réception DR1 par application aux deuxièmes données reçues DS1, d'une deuxième fonction cryptographique F2, associée à la première fonction cryptographique F1 et utilisant la clé Kd1 en paramètre.

A un deuxième instant courant T2, le dispositif de mesures CM est à une position courante P2 et recueille des données de mesures DM2. La position P2 est une position de la zone Z2.

Le dispositif de mesures CM sélectionne une clé K parmi les clés enregistrées dans le dispositif CM.

La clé K est sélectionnée en fonction du critère CR2. La position géographique courante du dispositif de mesures CM étant une position de la zone Z2, la clé K sélectionnée est la clé Kc2.

Puis, le dispositif de mesures CM obtient des deuxièmes données DS2 par application de la première fonction cryptographique F1 aux premières données DM2 et transmet un message de données contenant les deuxièmes données DS2 via la liaison de communication radio.

Le message de données est reçu par le deuxième dispositif de réception DR2.

L'utilisateur U2 accède au dispositif de réception DR2 et commande le déchiffrement des données reçues.

Le dispositif de réception DR2 obtient la deuxième clé Kd2 par accès à la zone mémoire sécurisée du dispositif portable DP2 de l'utilisateur U2.

Les données de mesures recueillies par le dispositif de mesures CM, c'est-à-dire les premières données DM2, sont obtenues par le dispositif de réception DR2 par application aux deuxièmes données reçues DS2, de la deuxième fonction cryptographique F2 utilisant la clé Kd2 en paramètre.

A un troisième instant courant T3, le dispositif de mesures CM est à une position courante P3 et recueille des données de mesures DM3. La position P3 est une position de la zone Z2.

Le dispositif de mesures CM sélectionne une clé K parmi les clés enregistrées dans le dispositif de mesures CM.

La clé K est sélectionnée en fonction du critère CR2. La position géographique courante P3 du dispositif de mesures CM étant une position de la zone Z2, la clé K sélectionnée est la clé Kc2.

Puis, le dispositif de mesures CM obtient des deuxièmes données DS3 par application de la première fonction cryptographique F1 aux premières données DM3 et transmet un message de données contenant les deuxièmes données DS3 via la liaison de communication radio.

Le message de données est reçu d'une part par le premier dispositif de réception DR1 et d'autre part par le deuxième dispositif de réception DR2 car le dispositif de mesures CM se trouve dans le champ radio des deux dispositifs DR1 et DR2.

L'utilisateur U2 accède au dispositif de réception DC2 et commande le déchiffrement des données reçues.

Le dispositif de réception DR2 obtient la deuxième clé Kd2 par accès à la zone mémoire sécurisée du dispositif portable DP2 de l'utilisateur U2.

Les données de mesures recueillies par le dispositif de mesures CM, c'est-à-dire les premières données DM3 sont obtenues par le dispositif de réception DR2 par application aux premières données reçues DM3, de la deuxième fonction cryptographique F2 utilisant la clé Kd2 en paramètre.

L'utilisateur U1 accède au dispositif de réception DR1 et commande le déchiffrement des données reçues.

Le dispositif de réception DR1 obtient la deuxième clé Kd1 par accès à la zone mémoire sécurisée du dispositif portable DP1 de l'utilisateur U1.

Des données DF sont obtenues par le dispositif de réception DR1 par application aux premières données reçues DM3, de la deuxième fonction cryptographique F2 utilisant la clé Kd1 en paramètre. La clé Kd1 n'étant pas la clé associée à la clé Kc2 utilisée par la première fonction F1, les données obtenues DF ne correspondent pas aux données de mesure DM3.

## Revendications

1. Procédé de traitement de données mis en oeuvre par un dispositif de traitement mobile et une pluralité de dispositifs de réception, le dispositif de traitement mobile étant apte à se déplacer dans une pluralité de zones de positionnement distinctes associées à une pluralité de clés de chiffrement respectives enregistrées sur le dispositif de traitement mobile, chaque dispositif de réception étant associé à une seule zone de positionnement dont il se trouve à proximité, le procédé comportant :
- une étape de sélection (E8, S6), parmi ladite pluralité de clés (Kcl, Kc2), sur ledit dispositif de traitement mobile, d'une clé (Kc) de chiffrement en fonction d'au moins un critère de comparaison (CR2) entre au moins une position dudit dispositif de traitement mobile et une dite zone de positionnement ;
- une étape (E10) d'obtention, sur le dispositif de traitement mobile, de deuxièmes données (DC1) par application à des premières données obtenues (D1), d'une fonction cryptographique (F1) de chiffrement utilisant la clé sélectionnée ;
- une étape (E12) d'envoi desdites deuxièmes données via une liaison de communication radio;
- une étape (E20) de réception desdites deuxièmes données par chaque dispositif de réception dans le champ radio duquel se trouve le dispositif de traitement ;
- une étape d'obtention (E22), sur au moins un des dispositifs de réception, d'une clé de déchiffrement (Kd1) associée à la clé de chiffrement associée à la zone dont il se trouve à proximité ;
- une étape d'application, par chaque dispositif de réception ayant reçu les deuxièmes données et ayant obtenu une clé de déchiffrement, d'une fonction de déchiffrement à l'aide de la clé obtenue auxdites deuxièmes données reçues, l'étape d'application conduisant à l'obtention (E24) desdites premières données lorsque la clé de déchiffrement est associée à ladite clé de chiffrement sélectionnée.

2. Procédé de traitement de données selon la revendication 1, dans lequel une dite zone de positionnement est identifiée par des coordonnées GPS du point central de ladite zone et une valeur définissant le rayon de ladite zone.

3. Système de traitement de données **caractérisé en ce que** le système comprend :
- un dispositif de traitement mobile apte à se déplacer dans une pluralité de zones de positionnement distinctes (Z1, Z2) associées à une pluralité de clés de chiffrement respectives (Kcl, Kc2) enregistrées sur le dispositif, ledit dispositif de traitement mobile comprenant
- des moyens pour sélectionner une clé (Kc) de chiffrement parmi ladite pluralité de clés (Kcl, Kc2) en fonction d'au moins un critère de comparaison (CR2) entre au moins une position dudit dispositif de traitement mobile et une dite zone de positionnement ;
- des moyens pour obtenir des deuxièmes données (DC1) par application à des premières données obtenues (D1), d'une fonction cryptographique (F1) de chiffrement utilisant la clé sélectionnée ;
- des moyens pour envoyer lesdites deuxièmes données via une liaison de communication radio ;
- une pluralité de dispositifs de réception, chaque dispositif de réception étant associé à une seule zone de positionnement dont il se trouve à proximité et comprenant :
- des moyens pour recevoir lesdites deuxièmes données lorsque le dispositif de réception se trouve dans le champ radio du dispositif de traitement;
- des moyens pour obtenir une clé de déchiffrement (Kd1) associée à la clé de chiffrement associée à la zone dont le dispositif de réception se trouve à proximité ;
- des moyens pour appliquer une fonction de déchiffrement à l'aide de ladite clé de déchiffrement obtenue auxdites deuxièmes données reçues par le dispositif de réception, l'application conduisant à l'obtention (E24) desdites premières données lorsque la clé de déchiffrement est associée à ladite clé de chiffrement sélectionnée.

## Patentansprüche

1. Datenverarbeitungsverfahren, das von einer mobilen Verarbeitungsvorrichtung und einer Mehrzahl von Empfangsvorrichtungen durchgeführt wird, wobei die mobile Verarbeitungsvorrichtung geeignet ist, sich in einer Mehrzahl von gesonderten Positionierungsbereichen zu bewegen, die einer Mehrzahl von jeweiligen Verschlüsselungsschlüsseln zugeordnet sind, die auf der mobilen Verarbeitungsvorrichtung gespeichert sind, wobei jede Empfangsvorrichtung einem einzelnen Positionierungsbereich zugeordnet ist, in dessen Nähe sie sich befindet, das Verfahren aufweisend:
- einen Schritt des Auswählens (E8, S6), aus der Mehrzahl von Schlüsseln (Kcl, Kc2) auf der mobilen Verarbeitungsvorrichtung, eines Verschlüsselungsschlüssels (Kc) in Abhängigkeit von mindestens einem Kriterium zum Vergleich (CR2) zwischen mindestens einer Position der mobilen Verarbeitungsvorrichtung und einem Positionierungsbereich;
- einen Schritt (E10) des Erhaltens, auf der mobilen Verarbeitungsvorrichtung, zweiter Daten (DC1) durch Anwendung einer kryptographischen Verschlüsselungsfunktion (Fl) auf erhaltene erste Daten (D1) mittels des ausgewählten Schlüssels;
- einen Schritt (E12) des Sendens der zweiten Daten über eine Funkkommunikationsverbindung;
- einen Schritt (E20) des Empfangens der zweiten Daten durch jede Empfangsvorrichtung, in deren Funkfeld sich die Verarbeitungsvorrichtung befindet;
- einen Schritt des Erhaltens (E22), auf mindestens einer der Empfangsvorrichtungen, eines Entschlüsselungsschlüssels (Kdl), der dem Verschlüsselungsschlüssel zugeordnet ist, der dem Bereich zugeordnet ist, in dessen Nähe sie sich befindet;
- einen Schritt des Anwendens, durch jede Empfangsvorrichtung, die die zweiten Daten empfangen und einen Entschlüsselungsschlüssel erhalten hat, einer Entschlüsselungsfunktion mithilfe des erhaltenen Schlüssels auf die empfangenen zweiten Daten, wobei der Schritt des Anwendens zum Erhalt (E24) der ersten Daten führt, wenn der Entschlüsselungsschlüssel dem ausgewählten Verschlüsselungsschlüssel zugeordnet ist.

2. Datenverarbeitungsverfahren nach Anspruch 1, wobei ein Positionierungsbereich durch GPS-Koordinaten des Mittelpunkts des Bereichs und einen Wert, der den Radius des Bereichs definiert, identifiziert wird.

3. Datenverarbeitungssystem, **dadurch gekennzeichnet, dass** das System Folgendes umfasst:
- eine mobile Verarbeitungsvorrichtung, die geeignet ist, sich in einer Mehrzahl von gesonderten Positionierungsbereichen (Z1, Z2) zu bewegen, die einer Mehrzahl von jeweiligen Verschlüsselungsschlüsseln (Kcl, Kc2) zugeordnet sind, die auf der Vorrichtung gespeichert sind, die mobile Verarbeitungsvorrichtung umfassend
- Mittel zur Auswahl eines Verschlüsselungsschlüssels (Kc) aus der Mehrzahl von Schlüsseln (Kcl, Kc2) in Abhängigkeit von mindestens einem Kriterium zum Vergleich (CR2) zwischen mindestens einer Position der mobilen Verarbeitungsvorrichtung und einem Positionierungsbereich;
- Mittel zum Erhalt zweiter Daten (DC1) durch Anwendung einer kryptographischen Verschlüsselungsfunktion (Fl) auf erhaltene erste Daten (D1) mittels des ausgewählten Schlüssels;
- Mittel zum Senden der zweiten Daten über eine Funkkommunikationsverbindung;
- eine Mehrzahl von Empfangsvorrichtungen, wobei jede Empfangsvorrichtung einem einzelnen Positionierungsbereich zugeordnet ist, in dessen Nähe sie sich befindet, und Folgendes umfasst:
- Mittel zum Empfang der zweiten Daten, wenn sich die Empfangsvorrichtung im Funkfeld der Verarbeitungsvorrichtung befindet;
- Mittel zum Erhalt eines Entschlüsselungsschlüssels (Kdl), der dem Verschlüsselungsschlüssel zugeordnet ist, der dem Bereich zugeordnet ist, in dessen Nähe sich die Empfangsvorrichtung befindet;
- Mittel zur Anwendung einer Entschlüsselungsfunktion mithilfe des empfangenen Entschlüsselungsschlüssels auf die zweiten Daten, die von der Empfangsvorrichtung empfangen werden, wobei die Anwendung zum Erhalt (E24) der ersten Daten führt, wenn der Entschlüsselungsschlüssel dem ausgewählten Verschlüsselungsschlüssel zugeordnet ist.

## Claims

1. Data-processing method implemented by a mobile processing device and a plurality of receiving devices, the mobile processing device being able to move in a plurality of distinct positioning regions associated with a plurality of respective encryption keys stored on the mobile processing device, each receiving device being associated with a single positioning region in proximity to which it is located, the method comprising:
- a step (E8, S6) of selecting, from said plurality of keys (Kcl, Kc2), on said mobile processing device, one encryption key (Kc) depending on at least one criterion of comparison (CR2) between at least a position of said mobile processing device and a said positioning region;
- a step (E10) of obtaining, on the mobile processing device, second data (DC1) by applying, to obtained first data (Dl), a cryptographic encryption function (Fl) using the selected key;
- a step (E12) of dispatching said second data via a radio communication link;
- a step (E20) in which said second data is received by each receiving device in the radio field of which the processing device is located;
- a step (E22) in which, by at least one of the receiving devices, a decryption key (Kdl) associated with the encryption key associated with the region in proximity to which it is located, is obtained;
- a step in which each receiving device having received the second data and obtained a decryption key applies a decryption function using the obtained key to said received second data, the applying step leading to the obtainment (E24) of said first data when the decryption key is associated with said selected encryption key.

2. Data-processing method according to Claim 1, wherein a said positioning region is identified by GPS coordinates of the central point of said region and a value defining the radius of said region.

3. Data-processing system, **characterized in that** the system comprises:
- a mobile processing device able to move in a plurality of distinct positioning regions (Z1, Z2) associated with a plurality of respective encryption keys (Kcl, Kc2) stored on the device, said mobile processing device comprising
- means for selecting one encryption key (Kc) from said plurality of keys (Kcl, Kc2) depending on at least one criterion of comparison (CR2) between at least a position of said mobile processing device and a said positioning region;
- means for obtaining second data (DC1) by applying, to obtained first data (Dl), a cryptographic encryption function (Fl) using the selected key;
- means for sending said second data via a radio communication link;
- a plurality of receiving devices, each receiving device being associated with a single positioning region in proximity to which it is located and comprising:
- means for receiving said second data when the receiving device is located in the radio field of the processing device;
- means for obtaining a decryption key (Kdl) associated with the encryption key associated with the region in proximity to which the receiving device is located;
- means for applying a decryption function using said obtained decryption key to said second data received by the receiving device, the application leading to the obtainment (E24) of said first data when the decryption key is associated with said selected encryption key.
